(19) Europäisches Patentamt
European Patent Office
Office européen des brevets

(11) Publication number: **0 236 542 B1**

(12) **EUROPEAN PATENT SPECIFICATION**

(45) Date of publication of patent specification: **24.06.92**

(51) Int. Cl.[5]: **C07F 9/30**

(21) Application number: **86110998.1**

(22) Date of filing: **20.08.81**

(60) Publication number of the earlier application in accordance with Art.76 EPC: **0 046 933**

The file contains technical information submitted after the application was filed and not included in this specification

# (54) Novel organic phosphinic acid compounds.

(30) Priority: **28.08.80 US 182296**

(43) Date of publication of application: **16.09.87 Bulletin 87/38**

(45) Publication of the grant of the patent: **24.06.92 Bulletin 92/26**

(84) Designated Contracting States: **AT BE DE FR GB NL SE**

(56) References cited:
**FR-A- 2 267 380**
**US-A- 3 966 569**
**US-A- 4 321 213**

**CHEMICAL ABSTRACTS, vol. 81, 1974, page 778, abstract no. 180681b, Columbus, Ohio, US; M. MARHOL et al.: "Selective ion exchangers containing phosphorus in their functional groups. I. Sorption and separation of some bivalent and trivalent ions", & J. RADIOANAL. CHEM. 1974, 21(1), 177-86**

(73) Proprietor: **CYANAMID CANADA INC.**
**2255 Sheppard Avenue East**
**Willowdale Ontario M2J 4Y5(CA)**

(72) Inventor: **Rickelton, William Andrew**
**208-6390 Huggins Street**
**Niagara Falls Ontario(CA)**
Inventor: **Robertson, Allan James**
**36 Forster Avenue**
**Thorold Ontario(CA)**
Inventor: **Burley, David Richard**
**652 Beechwood Lane**
**Kinnelon New Jersey(US)**

(74) Representative: **Wächtershäuser, Günter, Dr.**
**Tal 29**
**W-8000 München 2(DE)**

EP 0 236 542 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to novel organic phosphinic acid compounds. The novel organic phosphinic acid compounds are defined in the patent claim.

Also, the present invention relates to methods for producing the novel phosphinic acid compounds.

The compounds of the present invention are very useful extractants for the selective removal of cobalt-(II) from aqueous solutions, as described in EP-B1-0 046 933, from which the present application is a division.

It is the object of the present invention to provide novel compounds with well-balanced properties for use as a solvent extraction reagent. This object is solved, in accordance with the present invention, by novel organic phosphinic acid compounds of the formula

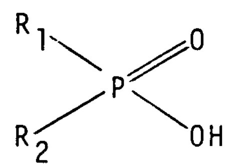

wherein $R_1$ is 2,4,4-trimethylpentyl and $R_2$ is 2,4,4-trimethylpentyl or cyclohexyl , or salts thereof.

The invention relates to di-2,4,4-trimethylpentylphosphine acid, i.e.

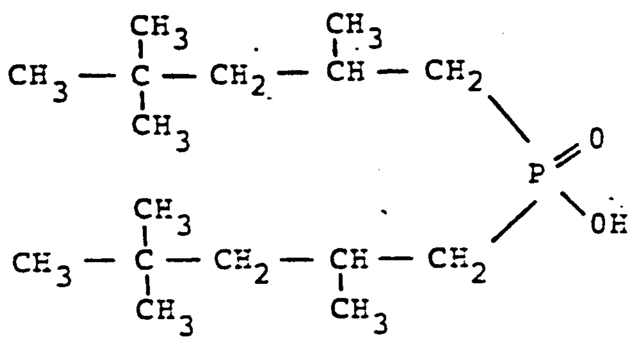

and a method for the production thereof which comprises free radical addition of two moles of 2,4,4-trimethylpentene-1 to 2,4,4 -trimethylpentylphosphine followed by its oxidation with two moles of hydrogen peroxide. The end product, either as an acid or in its salt form, finds utility as a cobalt extractant and, more specifically, as a selective extractant for cobalt (II) in aqueous cobalt (II)-bearing solutions containing nickel (II).

In the preparation of this compound free radical initiators of the azobis type are preferred although others, such as the peroxides, may be used. Azobisobutrylnitrile is the most preferred. Pure 2,4,4 -trimethylpentene-1 is commercially available or may be prepared with diisobutylene. The temperature range of the reaction is directly related to the half life of the initiator employed. For azobisobutrylnitrile the temperature range should be from about 40-110 ° C., preferably 60 ° to 90 ° C The phosphine addition will take place at any temperature, however to reduce unwanted tri-2,4,4 - trimethylpentylphosphine, high phosphine pressures, i.e., high phoshine to olefin mole ratios, are required. The preferred range is 300-700 psig although pressure ranging from 0 to 1000 psig can be employed. Under high phosphine conditions the mono 2,4,4-trimethylpentylphosphine formed can be recycled and converted into the di- form. Tri-2,4,4 -trimethylpentylphosphine formed under low phosphinic pressures is a yield loss.

In the oxidation stage, the oxidation of the dialkylphosphine to the dialkylphosphine ozide is exothermic and takes place readily at 30 ° C.-100 ° C., preferably for this first oxidation step at 50 ° C.-70 ° C. To convert the dialkylphosphine oxide to the dialkylphosphinic acid, the temperature should be increased to within 50 ° c. to 120 ° C., preferably 80 ° C. to 100 ° C. Higher temperatures tend to remove one alkyl group forming some monoalkylphosphonic acid. At lower temperatures the oxidation is rather slow and excessive reaction times may be required.

Whereas the exact scope of the instant invention is set forth in the appended claims, the following specific examples illustrate certain aspects of the present invention, and, more particularly, point out

methods of evaluating the same. However, the examples are set forth for illustration only and are not to be construed as limitations on the present invention except as set forth in the appended claims. All parts and percentages are by weight unless otherwise specified.

EXAMPLE 1

1500 parts of diisobutylene (a commercial source of 2,4,4 trimethylpentene-1 consisting of 70% 2,4,4 -trimethylpentene-1 and 30% 2,4,4 -trimethylpentene-2) is charged to the autoclave along with 25 parts azobis isoburylnitrile (Vazo 64®).

The autoclave is pressurized to 550 psig with phosphine and is quickly heated to 60 ° C. At this point the pressure begins to drop as the phosphine addition to 2,4,4 - trimethylpentene-1 begins. The pressure is maintained at 550 psig by the addition of more phosphine. The temperature is slowly raised from 60 ° C. to 90 ° C. over a 4 1/2 hour period. A further 1/2 hour at 90 - 100 ° C. destroys any remaining initiator and the reaction stops. The excess phosphine is vented off and the reaction product is cooled and discharged. A total of 546 parts of phosphine are used in the reaction. 1593 parts of product containing 15.62% 2,4,4 -trimethylpentene-1, 19.34% 2,4,4 -trimethylpentene-2, 34.63% mono 2,4,4 -trimethylpentylphosphine, 22.39% di-2,4,4-trimethylpentylphosphine and 2.0% tri-2,4,4 - trimethylpentylphosphine are recovered.

The product mixture is distilled to recover the di-2,4,4-trimethylpentylphosphine. The vapor temperature of the various components are as follows:

| | |
|---|---|
| olefin mixture | 90 ° C. (510 mm Hg) |
| mono 2,4,4 -trimethylpentylphosphine | 110 ° C. (124 mm Hg) |
| di-2,4,4 -trimethylpentylphosphine | 140 ° C. (64.5 mm Hg) |

477.1 parts of di-2,4,4 -trimethylpentylphosphine containing 0.27 mono and 2.44% tri-2,4,4 - trimethylpentylphosphine are charged to a heated stirred resin flask under an inert atmosphere. The dialkylphosphine is heated to 60 ° C. 290 parts of 22.49% $H_2O_2$ is added with stirring over a 3/4 hour period at 60-70 ° C. The remaining 290 parts are added over 1 hour period at 95-98 ° C. The product separated as a clear oily layer on top of the aqueous phase.

The product is decanted from the aqueous phase and is vacuumed dried overnight at 60 ° C. A total of 520 parts are recovered. It assayed 88% di-2,4,4 -trimethylpentyl- phosphinic acid and had a pKa of 6.03 ± 0.05 in 75% isopropanol.

The $^{31}P$ NMR chemical shift of the 2,4,4 -trimethylpentylphosphinic acid in isopropanol is -53.68 ppm with respect to 85% $H_3PO_4$. The $^{31}P$ NMR spectrum also indicated the presence of 2.0% di-2,4,4 -trimethylpentylphosphine oxide, 4.0% tri- 2,4,4 -trimethylpentylphosphine oxide and 7 - 8% total of 4 different phosphonic acids or phosphonate esters.

EXAMPLE 2

The following example illustrates the ability of di-2,4,4 -trimethylpentylphosphinic acid to separate cobalt (II) from nickel (II).

The di-2,4,4 -trimethylpentylphosphinic acid is dissolved in an aliphatic petroleum diluent (Solvesso® 100) modified with 5% v/v isodecanol to obtain a concentration of 15% by, volume, then a predetermined amount of 28% ammonium hydroxide is added to adjust the pH. An aliquot (50 mls.) is shaken at 50 ° C. for 10 minutes at 50 ° C. with an equal volume of an aqueous solution containing 1.97 gpl of cobalt (II) and 93.6 gpl of nickel (II); respectively, as sulfate salts, to extract the cobalt (II) into the organic phase. The aqueous phase is then separated from the organic phase and analyzed for cobalt (II) content. Based on the results obtained, the percent cobalt (II) extracted is calculated by mass balance. The percent nickel (II) extracted is determined by analyzing the organic phase. The results obtained are shown in Table I

TABLE I

| % Metal Extraction Co | Ni | Co/Ni Separation Factor (1) | Equilibrium pH |
|---|---|---|---|
| 3.09 | 0 | --- | 2.81 |
| 38.2 | 0.28 | 217 | 3.99 |
| 85.1 | 1.10 | 516 | 4.94 |
| 97.8 | 2.22 | 1975 | 5.33 |
| 100 | 3.10 | | 5.52 |

(1) $$\text{Separation Factor} = \frac{E^\circ_A\ Co\ (II)}{E^\circ_A\ Ni\ (II)}$$, where

$$E^\circ_A = \frac{\text{equilibrium concentration of the metal in the organic phase}}{\text{equilibrium concentration of the metal in the aqueous phase}}$$

The invention also relates to 2,4,4 -trimethylpentyl, cyclohexylphosphinic acid, i.e.,

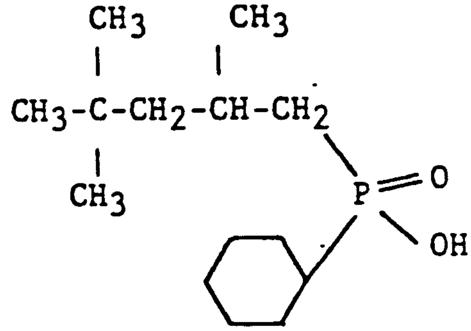

and a method for the production thereof which comprises free radical addition of mono 2,4,4 -trimethylpentylphosphine to cyclohexene followed by the oxidation of the 2,4,4 -trimethylpentyl, cyclohexylphosphine with two moles of hydrogen peroxide. The end product, either as an acid or in its salt form, finds

utility as a cobalt extractant and, more specifically, as a selective extractant for cobalt (II) in aqueous cobalt (II) - bearing solutions containing nickel (II).

In the preparation of this compound free radical initiators of the azobis type are preferred although others, such as the peroxides, may be used. Azobisobutrylnitrile is the most preferred. The temperature range of the reaction is directly related to the half life of the initiator employed. For azobisbutrylnitrile the temperature range should be about 40°-110°C, preferably 60° to 90°C. The mole ratio of olefin to mono alkylphosphine can vary from 0.1 to 10 depending on the relative rates of formation of the di-and tri-alkylphosphines. Preferably the range is between 0.5 to 3.

In the oxidation stage, the oxidation of the dialkylphosphine to the dialkylphosphine oxide is exothermic and takes place readily at 30°-100°, preferably for this first oxidation step at 50°-70°C. To convert the dialkylphosphine oxide to the dialkylphosphine acid, the temperature should be increased to within 50° to 120°C, preferably 80° to 100°C. Higher temperatures tend to remove one alkyl group forming some monoalkylphosphonic acid. At lower temperatures the oxidation is rather slow and excessive reaction times may be required.

Whereas the exact scope of the instant invention is set forth in the appended claims, the following specific examples illustrate certain aspects of the present invention, and, more particularly, point out methods of evaluating the same. However, the examples are set forth for illustration only and are not to be construed as limitations on the present invention except as set forth in the appended claims. All parts and percentages are by weight unless otherwise specified.

EXAMPLE 3

500 parts of 09.5% mono 2,4,4 trimethylpentylphosphine is charged along with 482 parts of cyclohexene to a 1 gallon autoclave. 15 parts of azobisobutrylnitrile (VAZO 64®) is added and the mixture quickly heated to 60°C. The temperature is then slowly raised from 60°C to 87°C over a 5 1/2 hour period.

The product contained 39.36% cyclohexene, 22.70% mono 2,4,4 trimethylpentylphosphine, 35.26% 2,4,4 trimethylpentyl, cyclohexylphosphine, and 0.35% 2,4,4 trimethylpentyl, dicyclohexylphosphine.

A further 20 parts of azobisobutrylnitrile is added to the mixture. It is heated quickly to 60°C and then slowly from 60°C to 89° over a 6 1/2 hour period.

The product contained 34.39% cyclohexene 11.14% mono 2,4,4 trimethylpentylphosphine, 48.3% 2,4,4 trimethylpentyl, cyclohexylphosphine, and 2.18% 2,4,4, trimethylpentyl dicyclohexylphosphine.

The product mixture is then distilled to remove the cyclohexene and mono 2,4,4 trimethylpentylphosphine. 516.9% of the residue containing 0.45% mono 2,4,4 trimethylpentylphosphine, 90.0% 2,4,4 trimethylpentyl cyclohexylphosphine and 3.48% 2,4,4 trimethylpentyl, dicyclohexylphosphine is placed in a stirred, heated resin flask under an inertr atmosphere. The mixture is heated to 50°C and 575 mL of 24% $H_2O_2$ is added slowly with stirring over 1 1/2 hours. During that time the temperature rose from 50°C to 98°C. To completely oxidize all the dialkylphosphine to the phosphinic acid, an additional 500 g of 24% $H_2O_2$ is added and the mixture heated for a further 5 hours at 100°C.

The product is then decanted as a visious oil. It assayed 85.97% phosphinic acid but also contained 9.58% mono 2,4,4 trimethylpentylphosphonic acid. During the severe oxidation conditions, a portion of the cyclohexyl groups were removed and the resulting 2,4,4 trimethylpentylphosphine is oxidized to 2,4,4 trimethylpentylphosphonic acid.

Most of the phosphonic acid is removed by scrubbing with 0.1N NaOH and water. The final product assayed 85.37% 2,4,4 trimethylpentyl, cyclohexylphosphinic acid and 4.86% 2,4,4 trimethylpentylphosphonic acid.

The product is a viscious oil and had a pKa of 6.04 in 75% isopropanol. The $^{31}$P NMR chemical shift in toluene is -53.13 ppm with respect to 85% $H_3PO_4$.

EXAMPLE 4

The following example illustrates the ability of 2,4,4 -trimethylpentyl, cyclohexyl phosphinic acid to separate cobalt (II) from nickel (II).

The 2,4,4 -trimethylpentyl, cyclohexylphosphinic acid is dissolved in an aliphatic petroleum diluent (Solvesso® 100) modified with 5% v/v isoderanol to obtain a concentration of 15% by volume, then a predetermined amount of 28% ammonium hydroxide is added to adjust the pH. An aliquot (50 mls) is shaken at 50°C. for 5 minutes at 50°C with an equal volume of an aqueous solution containing 2.05 gpl of cobalt (II) and 102.4 gpl of nickel (II), respectively, as sulfate salts, to extract the cobalt (II) into the organic phase. The aqueous phase is then separated from the organic phase and analyzed for cobalt (II) content.

Based on the results obtained, the percent cobalt (II) extracted is calculated by mass balance. The percent nickel (II) extracted is determined by analyzing the organic phase. The results obtained are shown in Table II.

TABLE II

| % Metal Extraction | | Co/Ni Separation | Equilibrium |
|---|---|---|---|
| Co | Ni | Factor | pH |
| 85.1 | 0.78 | 726 | 4.70 |
| 95.6 | 1.66 | 1274 | 5.18 |
| 98.4 | 3.19 | 1910 | 5.53 |
| 99.9 | 4.64 | 21030 | 5.80 |

(1) Separation Factor = $\frac{E^{o}_{A}\ Co\ (II)}{E^{o}_{A}\ Ni\ (II)}$, where

$$E^{o}_{A} = \frac{\text{equilibrium concentration of the metal in the organic phase}}{\text{equilibrium concentration of the metal in the aqueous phase}}$$

**Claims**

**Claim for the following Contracting States : BE, DE, FR, GB, NL, SE**

**1.** Organic phosphinic acid compounds of the formula

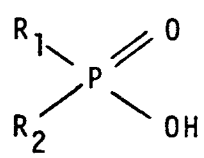

wherein $R_1$ is 2,4,4-trimethylpentyl and $R_2$ is 2,4,4-trimethylpentyl or cyclohexyl, or salts thereof.

**Claims for the following Contracting State : AT**

**1.** A method of preparing a compound having the formula

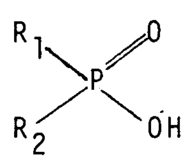

wherein $R_1$ and $R_2$ are 2,4,4-trimethyl pentyl , or salts thereof which comprises

(A) free radical addition of 2,4,4-trimethylpentene-1 to 2,4,4 -trimethyl pentylphosphine and then

(B) oxidation of the resultant compound with hydrogen peroxide, step (A) being conducted at a temperature ranging from about 40 to 110 °C and a pressure of from 0.1 to 7.0 MPa (0 to 1000 psig)

and step (B) being conducted at a temperature of 30 to 120 ° C.

**2.** A method of preparing a compound having the formula

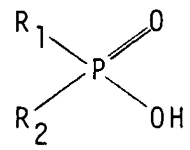

wherein $R_1$ is 2,4,4-trimethyl pentyl and $R_2$ is cyclohexyl, or salts thereof which comprises
(A) the free radical addition of 2,4,4-trimethylpentylphosphine to cyclohexene and then
(B) oxidation of the resultant compound with hydrogen peroxide, step (A) being conducted at a temperature ranging from about 40 to 110 ° C and a pressure of from 0.1 to 7.0 MPa (0 to 1000 psi g) and step (B) being conducted at a temperature of 30 to 120 ° C.

**Revendications**
**Revendication pour les Etats contractants suivants : BE, DE, FR, GB, NL, SE**

**1.** Acides phosphiniques organiques de la formule

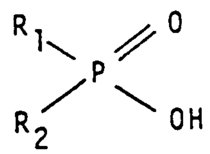

dans laquelle $R_1$ est le groupe 2,4,4-triméthylpentyle et $R_2$ est le groupe 2,4,4-triméthylpentyle ou cyclohexyle, ou leurs sels.

**Revendications pour l'Etat contractant suivant : AT**

**1.** Procédé de préparation d'un composé ayant la formule

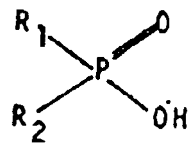

dans laquelle $R_1$ et $R_2$ sont le 2,4,4-triméthylpentyle,ou des sels de celui-ci qui comprend :
(A) l'addition radicalaire libre de 2,4,4-triméthylpentène-1 à la 2,4,4-triméthylpentylphoshine puis
(B) l'oxydation du composé résultant avec le péroxyde d'hydrogène, l'étape (A) étant conduite à une température d'environ 40 à 110 ° C et à une pression de 0,1 à 7,0 MPa (0 à 1000 psig) et l'étape (B) étant conduite à une température de 30 à 120 ° C.

**2.** Procédé de préparation d'un composé ayant la formule

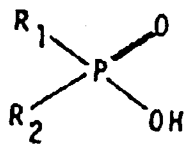

dans laquelle $R_1$ est le 2,4,4-triméthylpentyle et $R_2$ est le cyclohexyle, ou leurs sels qui comprend :

(A) l'addition radicalaire libre de 2,4,4-triméthylpentylphosphine au cyclohexène puis

(B) l' oxydation du composé résultant par le pèroxyde d'hydrogène l'étape (A) étant conduite à une température d'environ 40 à 110 ° C et à une pression de 0,1 à 7,0 MPa (0 à 1000 psig) et l'étape (B) étant conduite à une température de 30 à 120 ° C.

**Patentansprüche**

**Patentanspruch für folgende Vertragsstaaten : BE, DE, FR, GB, NL, SE**

**1.** Organische Phosphinigsäureverbindung der Formel

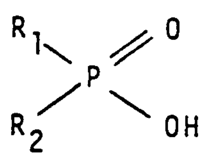

wobei $R_1$ für 2,4,4-Trimethylpentyl steht und $R_2$ für 2,4,4-Trimethylpentyl oder Cyclohexyl steht, oder deren Salze.

**Patentansprüche für folgenden Vertragsstaat : AT**

**1.** Verfahren zur Herstellung einer Verbindung mit der Formel

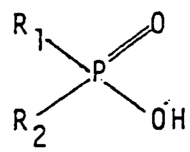

wobei $R_1$ und $R_2$ für 2,4,4-Trimethylpentyl stehen, oder deren Salze, umfassend

(A) frei radikalische Addition von 2,4,4-Trimethylpenten-1 an 2,4,4-Trimethylpentylphosphin und anschließend

(B) Oxidation der resultierenden Verbindung mit Wasserstoffperoxid, wobei die Stufe (A) bei einer Temperatur im Bereich von etwa 40 bis 110 ° C und bei einem Druck von 0,1 bis 7,0 MPa (0 bis 1000 psig) durchgeführt wird und die Stufe (B) bei einer Temperatur von 30 bis 120 ° C durchgeführt wird.

**2.** Verfahren zur Herstellung einer Verbindung mit der Formel

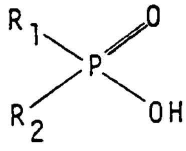

wobei $R_1$ für 2,4,4-Trimethylpentyl steht und $R_2$ für Cyclohexyl steht, oder deren Salze, umfassend

(A) frei radikalische Addition von 2,4,4-Trimethylpentylphosphin an Cyclohexen und anschließend

(B) Oxidation der resultierenden Verbindung mit Wasserstoffperoxid, wobei die Stufe (A) bei einer Temperatur im Bereich von etwa 40 bis 110 °C und bei einem Druck von 0,1 bis 7,0 MPa (0 bis 1000 psig) durchgeführt wird und die Stufe (B) bei einer Temperatur von 30 bis 120 °C durchgeführt wird.